# EUROPEAN PATENT SPECIFICATION

(11) **EP 3 735 375 B1**
(45) Date of publication and mention of the grant of the patent: **18.02.2026**
(21) Application number: 19713544.5
(22) Date of filing: 19.02.2019
(51) Int. Cl.: B65G 17/06, B65H 57/04, B65H 57/14, B65H 57/26, E21B 19/22, F16L 1/23

(54) **OVERBOARDING DEVICE**
ÜBERLADEVORRICHTUNG
DISPOSITIF DE PASSAGE PAR-DESSUS BORD

(30) Priority: 22.02.2018 GB 201802846
(43) Date of publication of application: 11.11.2020
(73) Proprietor: Nexans Norway AS, 0195 Oslo (NO)
(72) Inventor: MACKIE, Alan Andrew, Micheldever, Hampshire SO21 3QX (GB); BROWN, Stephen Arthur, Micheldever, Hampshire SO21 3QX (GB)
(74) Representative: Marks & Clerk LLP
(86) International application number: PCT/GB2019/050435
(87) International publication number: WO 2019/162655

(56) References cited:
- WO-A1-01/57355
- WO-A1-2017/075709
- WO-A1-93/06402
- FR-A1- 2 764 861
- GB-A- 2 513 342
- US-A- 3 285 485
- US-A- 3 310 213
- US-A- 5 527 134
- US-A1- 2016 069 478
- US-A1- 2017 159 382
- US-B1- 6 173 769
- US-B1- 6 332 501

## Description

The present invention relates to an overboarding device for continuously supporting a flexible elongate element whilst overboarding the flexible elongate element from a vessel.

Flexible elongate elements, such as communication cables, heavy power cables, oil and/or gas flexible pipes may be required to be overboarded into the water from a vessel. These flexible elongate elements may be required to be overboarded from a vessel whilst the flexible elongate element is under significant tension.

Tensioning of the flexible elongate element allows the speed of descent into or through the water to be controlled, once overboarded. The amount of tensioning is primarily caused by the weight of the flexible elongate element in the water and/or its buoyancy and the depth of the water.

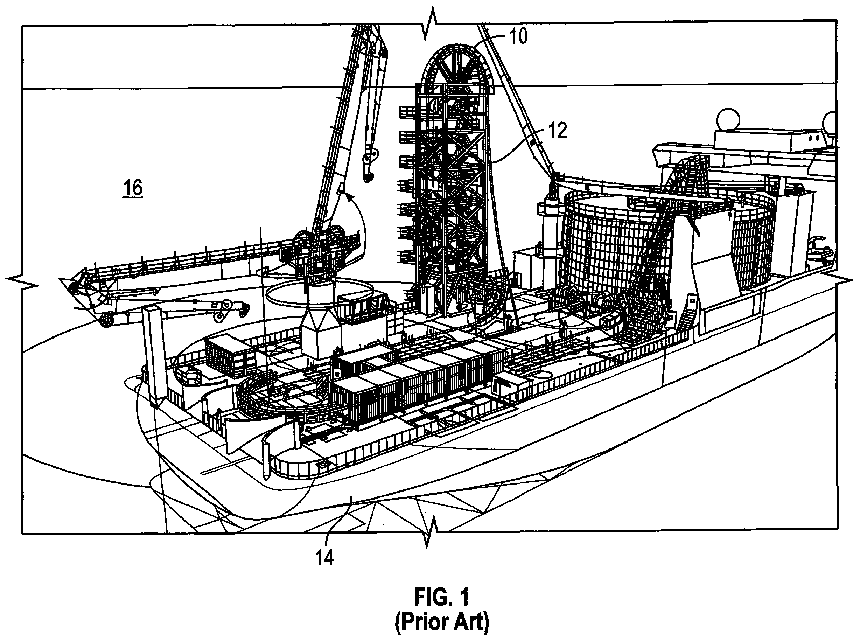

Referring to Figure 1, if significant tensioning of the flexible elongate element is required, vertical lay towers 10 are typically used. A flexible elongate element 12 is directed towards the top of the tower 10 which extends upwardly from the deck of a vessel 14. The flexible elongate element 12 is then directed from the top of the tower 10 vertically downwards to the water 16 whilst under significant tension.

Vertical laying ensures that the flexible elongate element 12 is not required to be transitioned from a horizontal to a vertical orientation under tension. Transitioning from a horizontal to a vertical orientation under significant tension can cause damage to the flexible elongate element. This is especially the case where the flexible elongate element is discontiguously, or discontinuously, supported which can cause damage to the flexible elongate element due to overbending and/or point load.

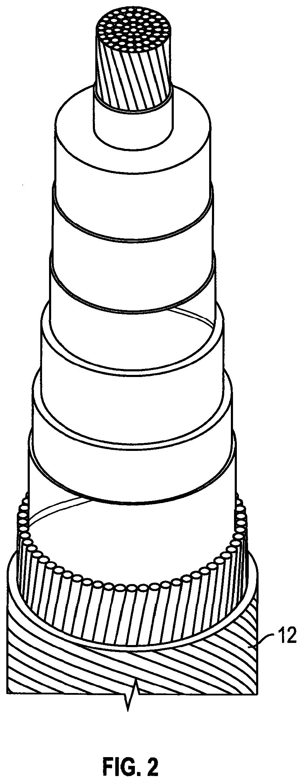

The flexible elongate element 12 is vulnerable to damage due to its complex layered structure, as shown by example only in Figure 2. If the flexible elongate element 12 is damaged, the damaged portion is required to be removed and the undamaged portions of the flexible elongate element spliced together, a process which is very time-consuming and arduous when undertaken on the vessel during a laying operation.

Furthermore, vertical lay towers 10 are typically costly and cannot be accommodated on small vessels. Additionally, given their size and/or weight, large vertical lay towers 10 are typically only able to be accommodated on specifically designed vessels, and may conventionally be positioned at or adjacent to the side of the vessel, rather than the stem, although stem overboarding and/or overboarding via a moon pool may be possible. Stem overboarding may be preferred over side overboarding as this results in a more efficient deck configuration and/or easier continuous overboarding.

US5527134A discloses a reel pipe laying vessel including a pipe conditioning apparatus located at its stem. The pipe conditioning apparatus includes a radius control apparatus for imparting a substantially uniform curve to the pipe after it is unspooled from a reel. An endless pipe conveyor apparatus is arranged around the radius control apparatus to convey the pipe.

The present invention seeks to provide a solution to these problems.

The present invention is defined herein in accordance with independent claim 1. Optional features of the invention are set out in the appended dependent claims. According to a first aspect of the present invention there is provided an overboarding device for overboarding a flexible elongate element from a vessel, the device comprising: a movable support element for supporting a flexible elongate element, the movable support element having a plurality of support members and each support member having a support surface, which has a support-surface base, which is a lowest most line, point or plane, bottom or nadir of the support surface; and at least one chain element for moving the movable support element, the chain element having a plurality of chain members, each chain member being attached to at least one support member and pivotably attached to at least one adjacent chain member at a chain pivot; characterised in that the overboarding device is configured for contiguously supporting the flexible elongate element, as support surfaces of adjacent support members pivot along an interface and support surface bases of adjacent support surfaces interengage along said interface, said interface being positioned coaxially or substantially coaxially with the chain pivot of the corresponding chain members, such that adjacent support surfaces remain at least in part contiguous as the movable support element is driven.

Adjacent support members being interengaged or aligned with a pivot point of the chain of the drive enables adjacent supports to pivot in tandem with chain members without interrupting the contiguity of the support surface. This is the case even if a moving path, defined by the support surfaces, and/or a drive path, defined by the chain element, have varying curvature. For example, if the moving path is radially outward of the drive path, both having a convex portion, a concave portion of a tighter curvature than the convex portion and more curved convex transition portions interconnecting the two, then the support members would not be able to interengage on the convex portion without impinging and/or clashing on the concave portion. Alternatively, if the drive path were outward of the moving path, the support members would be able to interengage on the convex portion. However, the support surfaces would clash and/or impinge on the more curved convex transition portion.

A contiguous support surface for the flexible elongate element prevents or limits stress and/or force concentration on the flexible elongate element caused by spaces in the support. Preventing force concentrations prevents or limits the risk of damage to the flexible elongate element from contact with the support surface when being overboarded under tension.

Preferably, the movable support element may define an endless moving path having curvate upper and lower path portions, the lower path portion being more tightly curved than the upper path portion. A curvate upper path portion allows for a minimum bend radius of the flexible elongate element to be maintained to avoid damage to the flexible elongate element. A more curvate lower path portion allows for the movable support element to be routed back to a vessel end of the overboarding device underneath the upper path portion.

Advantageously, the movement of the pivotable interface of each support member defines the endless moving path. A base of the support surface between the pivotal interface is where the majority of the force on the support surface of the cable acts. Therefore, the base of the support surface is the most important place for the support surfaces to be contiguous across adjacent support members.

Beneficially, the or each chain element may define an endless curved drive path, the drive path being aligned with and having the same length as the moving path. The same length drive and moving path enable the support surface to be contiguous.

In a preferable embodiment, the width of each support member may decrease in two directions from an extent of the support member between the two pivotable interfaces associated with each support member. The base of the support surface between the two pivotable interfaces is the most important place for the support surface to be contiguous, as described as above.

Advantageously, the profile of the support member may be at least in part trapezoidal. Being at least in part trapezoidal allows for the support to pivot towards each other around curved portions of the moving path whilst maintaining a contiguous support surface.

Optionally, the or each chain element defines an endless curved drive path, the drive path being aligned with the endless curved moving path. Preferably there may be two chain elements, each chain element being positioned at a different lateral edge of the movable support element to each other. Two chain elements on either lateral side of the movable support element allows for the movable support element to be driven around a vertically curved path whilst having aligned and/or constantly curved moving and drive paths.

Advantageously, the movable support element may have a flexible-elongate-element receiving channel to provide lateral support to the flexible elongate element when positioned on the support surface. Lateral support prevents or limits the cable from being unintentionally displaced from the overboarding device in a lateral direction.

Preferably, each support member may include a channel support and a chain engagement member, the channel support and the chain engagement member being radially and/or vertically spaced apart. This arrangement enables the flexible elongate element to be aligned with the chain element.

Advantageously, the chain member may be positioned vertically beneath and/or inward in an axial direction of the overboarding device of the chain engagement member.

Optionally, each support member may be spaced from each adjacent support member by a triangular prism shaped space so that each support member is able to act as a stop to prevent or limit over-rotation of adjacent support members when each support member rotates towards an adjacent support member.

Beneficially, the movable support element may be arcuate or substantially arcuate. An arcuate movable support element enables constant curvature horizontal to vertical overboarding action.

Preferably, the chain members may be movable on a plurality of rotatable elements.

The invention will now be more particularly described, by way of example only, with reference to the accompanying drawings, in which:
Figure 1 shows a perspective representation of a vessel having a vertical lay tower in accordance with the state of the art;
Figure 2 shows a representation of a known structure of an in use flexible elongate element;
Figure 3 shows a perspective representation of an in use vessel having an overboarding device in accordance with one embodiment of the first aspect of the present invention and the in use flexible elongate element being overboarded;
Figure 4 shows an orthographic representation of the overboarding device of Figure 3;
Figure 5 shows a perspective representation of a vessel end part of the overboarding device of Figure 3;
Figure 6 shows a partial cross-sectional view of the overboarding device of Figure 3;
Figure 7 shows an enlarged view of box D of Figure 6;
Figure 8a shows a cross-section of two support members and two chain members in position A of Figure 5;
Figure 8b shows a rear view of the support members and chain members of Figure 8a;
Figure 9a shows a similar view to that of Figure 8a of two half support members and two chain members in position B of Figure 5;
Figure 9b shows a rear view of the support members and chain members of Figure 9a;
Figure 10a shows a similar view to that of Figure 8a of two half support members and two chain members in position C of Figure 5;
Figure 10b shows a rear view of the support members and chain members of Figure 9a;
Figure 11 shows a side view of two support members of a second embodiment of the present invention in a position similar to that of position A;
Figure 12 shows a similar view to Figure 11 with the support members in a position similar to that of position B;
Figure 13 shows a similar view to Figure 11 with the support members in a similar position to that of position C;
Figure 14 shows a side view of part of an overboarding device;
Figure 15 shows a lateral cross-section of the overboarding device of Figure 11;
Figure 16 shows a side view of part of an overboarding device;
Figure 17 shows an enlarged view of a vessel end or overboard end of the overboarding device of Figure 16;
Figure 18 shows a side view of an overboarding device, with a flexible elongate element and vessel indicated in broken line;
Figure 19 shows an isometric view of the overboarding device of Figure 18; and
Figure 20 shows a portion of the movable support element.

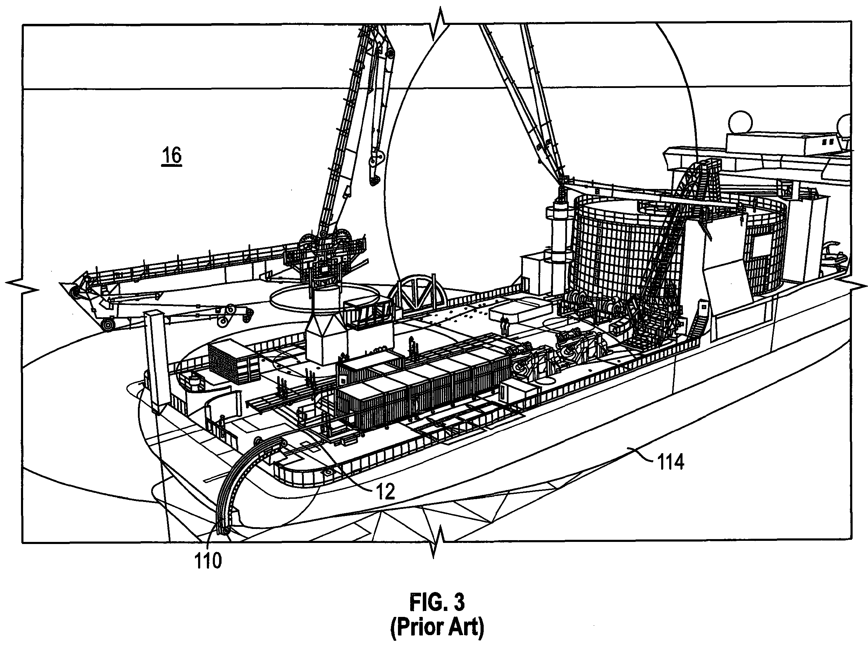

Referring to Figure 3 there is shown an overboarding device 110 for contiguously supporting a flexible elongate element 12 whilst overboarding the flexible elongate element 12 from a vessel 114. The overboarding device 110 comprises a movable support element 118 having a plurality of support members 120 or pads and at least one chain element 122, which may be a chain drive element, having a plurality of chain members 124, chain links or chain drive members.

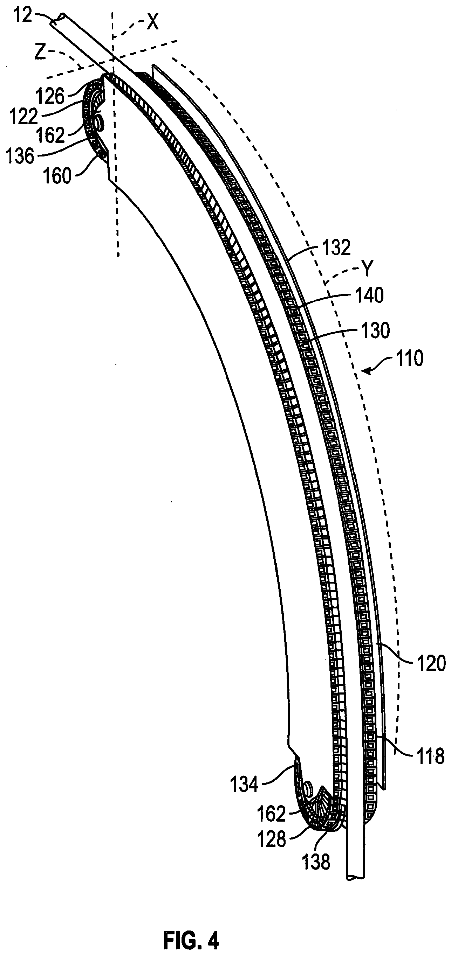

Figure 4 shows an enlarged view of the overboarding device 110 with the in use flexible elongate element 12 with the vessel omitted for clarity. The movable support element 118 here has a form so that it may transition from having a horizontal or substantially horizontal orientation to having a vertical or substantially vertical orientation. Thus, here the movable support element 118 is preferably curvate, substantially curvate, arcuate and/or substantially arcuate such that a lateral cross section of the movable support element 118 may or may substantially have the form of one or more arcs of a circle or more specifically one or more arcs of substantially a quarter of a circle. The overboarding device 110 may have a vessel end 126, at or adjacent to an end of the vessel 114, and an overboard end 128, at, adjacent to, vertically spaced apart from, or submerged in the water 16. Given that the overboarding device 110 and/or movable support element 118 have substantially the form of a part of a circle, the overboarding device 110 and/or movable support element 118 may have a radial direction X, circumferential direction Y and axial direction Z.

The movable support element 118 preferably defines an endless moving path 130 having a curvate upper path portion 132, or support path portion, and a curvate lower path portion 134, or return path portion, the lower path portion 134 being more curved and/or having a smaller radius of curvature than the upper path portion 132. The upper path portion 132 has a convex or substantially convex exterior facing surface and the lower path portion 134 has a concave or substantially concave exterior facing surface. The movable support element 118 preferably also has a vessel-end path portion 136 and an overboard-end path portion 138, both end path portions 136, 138 having convex exterior facing surfaces. The end path portions 136, 138 are both more curved than the upper and lower path portions 132, 134. Whilst the lower path portion may be here arcuate and or curvate, it will be appreciated that the lower path portion may be straight, substantially straight, planar and/or substantially planar. This can allow for a more compact arrangement as compared to a curvate lower path portion.

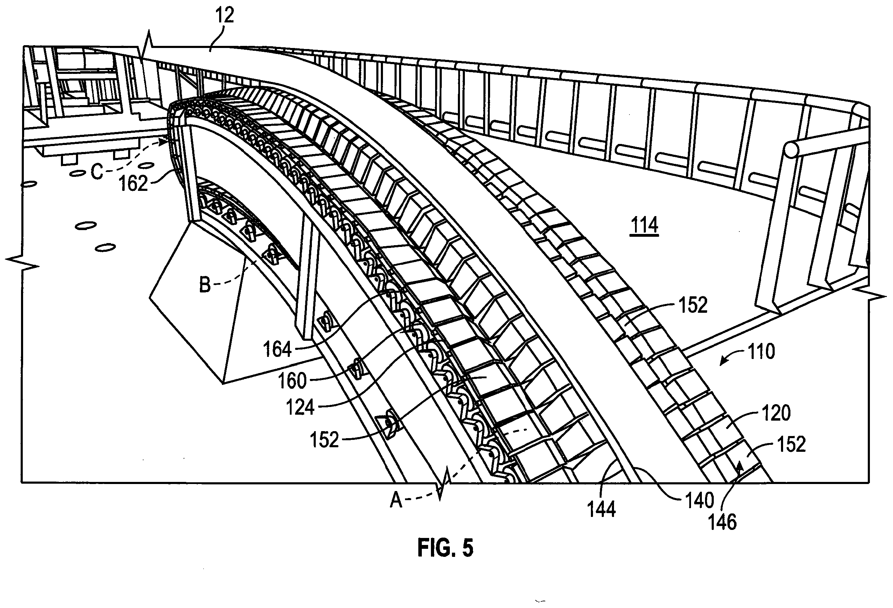

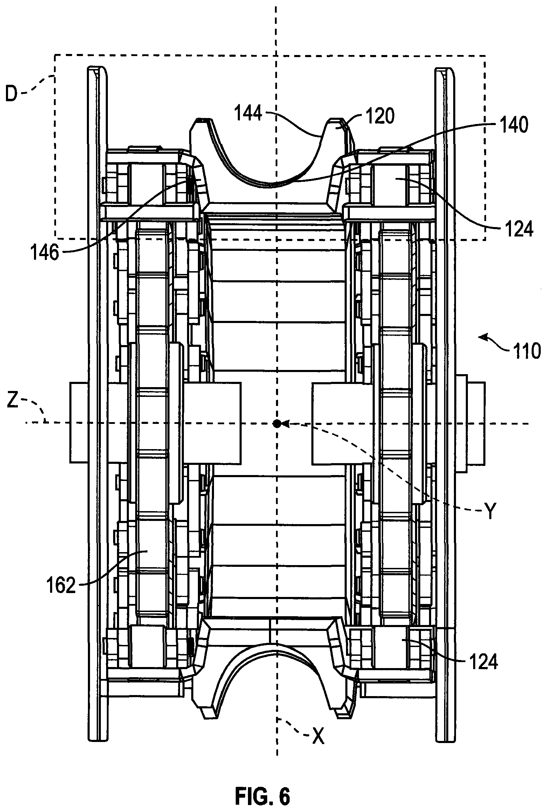

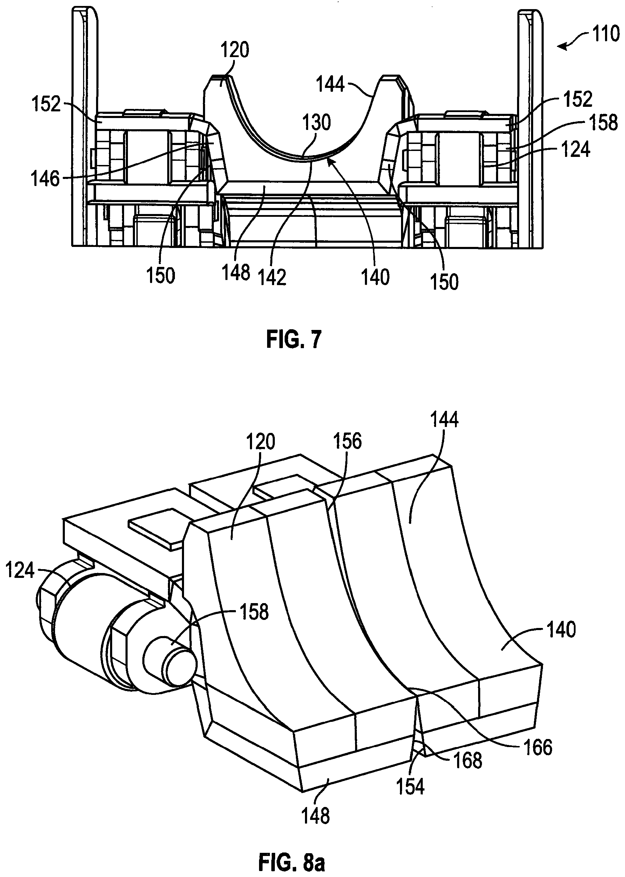

Figure 5 shows an enlarged view of the overboarding device. Each support member 120 has a support surface 140. The support surface 140 is preferably curvate and/or concave having a profile or substantially having a profile of a semi-circle. Figures 6 and 7 show lateral cross-sections of the overboarding device 110 and thus illustrate the semi-circular profile. The support surface 140 has a support-surface base 142 which may be a lowest most line, point or plane, bottom or nadir of the support surface 140. The curvate support surface 140 of each support member 120 forms at least part of a flexible-elongate-element receiving channel 144 or groove which here has a semi-circular or substantially semi-circular profile or lateral cross section. The channel 144 may provide lateral support or support in the axial direction of the overboarding device 110 to the in use flexible elongate element 12. It will be appreciated that the support members may have a pliable and/or soft coating or covering to reduce stress on the in use flexible elongate element.

It will be appreciated that for manufacturing purposes, the support members may be formed from two halves, each half having a curvate surface of a quarter-circle. Therefore, a pair of half support members may be attached together to form a support member. Furthermore, it will be appreciated that the support members may not have a flexible-elongate-element receiving channel.

Referring in particular to Figures 6 and 7, each support member 120 further comprises a body or saddle portion 146. The body portion 146 is preferably U-shaped or substantially U-shaped in an axial or lateral direction of the overboarding device 110. The body portion 146 has a channel support 148 which extends in a plane or substantially in a plane in axial and circumferential or substantial circumferential directions of the overboarding device 110. At each axial end of the channel support 148, the body portion 146 extends upwardly, substantially upwardly, radially outwardly, or substantially radially outwardly to form an intermediary part 150. At the radially outermost end of each intermediary part 150, a chain engagement member 152 extends in a plane or substantially in a plane in axial and circumferential or substantial circumferential directions of the overboarding device 110. In this way the channel support 148 and the chain engagement members 152 are radially and/or vertically spaced apart from each other. Whilst each support member is described as having a non-planar body or saddle portion, it will be appreciated that the body portion may in fact be substantially planar and that the chain engagement member and the channel support and/or support surface may be aligned or substantially aligned.

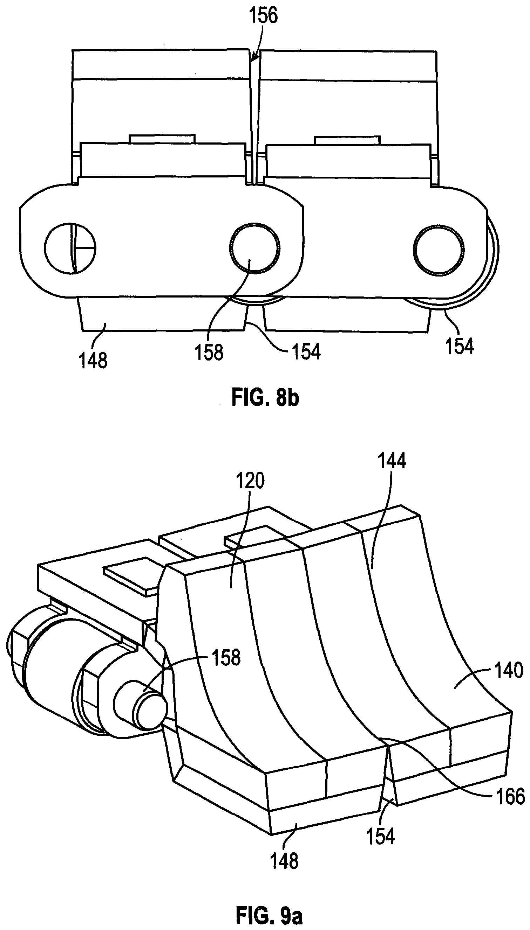

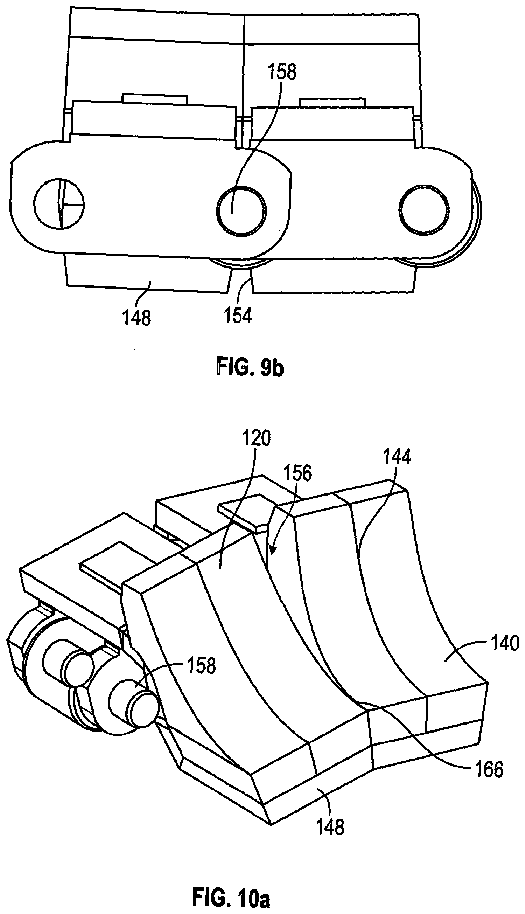

The profile of the support member 120 is preferably at least in part trapezoidal. In this way, the channel support 148 and/or a lower part of the intermediary part 150 may have a trapezoidal lateral or radial cross-section. Therefore, from the support-surface base 142 each support member 120 extends inwardly, narrows or tapers, in a radially inward direction or downwards. Referring to Figures 8a, 8b, 9a and 9b, this is so that, when one support member 120 is engaged with another support member 120 in an adjacent circumferential direction, so that the support-surface bases 142 of adjacent support members 120 engage, and the support members 120 have the same orientation, there is a triangular prism shaped space 154 radially inwardly or beneath the support surface 140 and between the support members 120. Whilst a triangular prism shaped space is described, it will be appreciated that the space may in fact be any shape, for example a cuboidal or a trapezoidal prism.

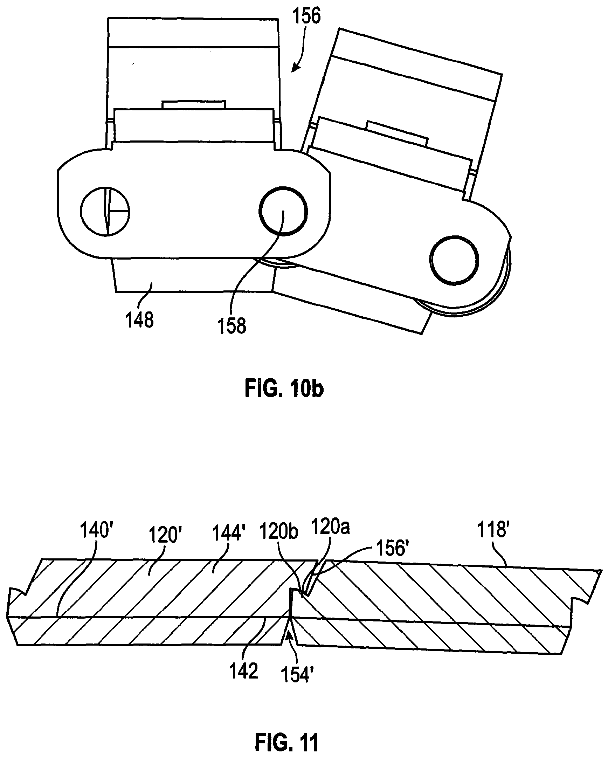

Similarly, the upstanding side walls of the channel 144, an upper part of the intermediary part 150 and/or the chain engagement member 152 may also have a trapezoidal radial cross-section. Therefore, from the support-surface base 142, each support member 120 extends inwardly in a radial outward direction or upwards. Referring to Figures 8a, 8b, 10a and 10b, with a pair of circumferentially adjacent support members 120 as described above, there is a there is a triangular prism shaped space 156 radially outwardly or above the support surface 140 and between the support members 120.

There are preferably two chain elements 122. Each chain element 122 being laterally spaced apart and laterally interposed form each other by at least part of the movable support element 118. Each chain element 122 preferably comprises a plurality of chain members 124, each chain member 124 attached to at least one support member 120. Each chain member 124 is also attached to at least one adjacent chain member 124, of the same chain element 122, at a chain pivot 158. Each chain pivot 158 has a chain pivot axis. Each chain member 124 is here attached to two circumferentially adjacent chain members 124 to form an endless or contiguous chain element 122. Therefore, each chain member 124 has two chain pivots 158.

Each chain element 122 defines an endless drive path 160 and the drive path 160 is aligned with the moving path 130. In this way the drive path 160 may be considered to have the same extent or substantially the same extent of the moving path 130. The drive path 160 is positioned laterally to, adjacent to or spaced apart from the moving path 130.

Each chain member 124 is preferably attached to a support member 120 via the chain engagement member 152 of the support member 120. Here one chain member 124 from each chain element 122 is attached to one support member 120 at opposite axial edges. It will be appreciated that there may only be one chain element and so there may be one chain member attached to one support member. Alternatively, multiple chain members of the same chain element may be attached to the same support or *vice versa.* Whilst each support member is described as engaging with the chain element and/or at least one chain member it will be appreciated that each support member may in fact not be directly attached to the chain element. Instead, at least two of the support members may be attached together with at least one of the at least two support members being attached to the chain element. Additionally, it will be appreciated that the chain member may be attached to the support surface directly and not via the chain engagement member and/or the chain members and support members may be unitarily formed as a one piece.

Each chain member 124 is positioned laterally, or in a rotational axis of the overboarding device 110, adjacent and outwards of the intermediary part 150 of the movable support member 120. Each chain member 124 is positioned vertically beneath or inward in an axial direction of the overboarding device 110 of the chain engagement member 152. An extent of each chain member 124 in a circumferential direction of the overboarding device 110 of between the two chain pivots 158 matches or substantially matches the greatest circumferential extent of each support member 120. The greatest circumferential extent of each support member 120 is at the support-surface base 142. The support-surface base 142 therefore preferably extends between the two chain pivots 158. At least part of each edge of the base of the support which extend in an axial direction of the overboarding device 110 preferably extends coaxially with the chain pivot axis.

The chain element 122 is preferably driven by at least one drive sprocket 162 or gear. Here there are two pairs of drive sprockets 162, one pair at or adjacent to the vessel end 126 and one pair at or adjacent to overboard end 128 of overboarding device 110. Each sprocket 162 may interdigitate with at least one chain member 124. At least one of the sprockets 162 may be rotatable by a motor or manually so that the chain element 122 is drivable around the endless drive path 160. Alternatively, the rotation of the sprockets 162 may not be driven by an external motor or driven manually and the movement of the chain element 122 may be caused by the overboarding of the flexible elongate element 12 from the vessel 114.

Each chain element 122 is preferably movable around at least part of the endless drive path 160 on rotatable elements 164, which may be rollers. Alternatively or additionally, the chain element 122 may be movable around at least part of the endless drive path 160 on a rail.

The movable support members 120 may similarly be supported by rotatable elements 164, rollers or rails. Alternatively, the movable support members 120 may be suspended by the chain elements 122. In this instance it will be appreciated that the support members may have rotatable elements to allow rotational support along a lower radially inward of the movable support element. Each support member 120 is attached to the two chain members 124, which are positioned on either side of the support member 120 in an axial direction of the overboarding device 110. Movable support members 120 are arranged around the endless moving path 130 so that at least the support-surface base 142 of each movable support member 120 engages at least the support-surface base 142 of the two adjacent movable support members 120. In this way there is provided a contiguous, unbroken, endless and/or continuous flexible elongate support surface around the endless moving path 130 and across adjacent support members 120.

In use, the overboarding device 110 may preferably be positioned on a stem deck of the vessel 114 and may more preferably be mounted at or adjacent to a stem edge of the vessel 114. The overboarding device 110 may here be mounted so that a vessel end 126 is positioned over the vessel 114 and that a portion of the overboarding device 110 adjacent to the vessel end 126 is parallel or substantially parallel with the deck of the vessel 114. The overboard end 128 is preferably positioned above and/or adjacent to the water 16 and spaced away from the stem of the vessel 114. A portion of the overboarding device 110 adjacent to the overboard end 128 may be perpendicular to or laterally orientated to the surface of the water 16. Whilst described as being positioned and mounted in this way, it is appreciated that the overboarding device may in fact be positioned on or mountable to a different area of the vessel. For example, the overboarding device may be mounted such that it is supported entirely over the water or it may be positioned or mounted at or adjacent to a bow, starboard, stem or port sides of the vessel. Additionally, the vessel end portion may not be parallel with a deck of the vessel and the overboard end may be at an angle to the surface of the water.

The in use flexible elongate element 12 may be aligned with the movable support element 118 and flexible-elongate-element receiving channel 144 and the flexible elongate element 12 may be moved towards the overboarding device 110. Typically, the flexible elongate element 12 may be unwound from a reel or spool.

The flexible elongate element 12 may be received in or mounted on the flexible-elongate-element receiving channel 144 so that the flexible elongate element 12 is supported on at least part of the support surface 140 of at least one movable support member 120. Preferably, the flexible elongate element 12 is mounted on the support-surface base 142. The sprockets 162 are then driven or otherwise rotated so that the chain drive elements 122 move around the drive path 160, here in a clockwise direction. Each of the movable support members 120, and therefore the movable support element 118, is thereby driven around the moving path 130, by virtue of the attachment of each movable support member 120 to at least one chain member 124 of each chain element 122.

Referring to Figures 8a and 8b, each chain member 124 and support member 120 moves around the convex upper path portion 132. Whilst any one of the support members 120 is on the upper path portion 132, the support surfaces 140, and the support-surface bases 142, of adjacent support members 120 interengage along a pivotable interface 166. Adjacent support members 120 preferably pivot about the pivotable interface 166 of the support surface 140 of adjacent support members 120. Each pivotable interface 166 is preferably aligned with at least one chain pivot 158 of the chain element 122 The pivoting may be such that the bases of the channel 144 of adjacent support members 120 may, at least in part, interengage. This interengagement is preferably along an adjacent-support-member facing surface 168 of each support member 120.

The channel supports 148 of adjacent support members 120 here do not engage whilst the support members 120 are on the upper path portion 132, although it will be appreciated that for a more curvate and/or convex upper path portion, or smaller spacing between the support members, the channel supports of adjacent support members may in fact engage. Given the pivoting about the interface 166 between the support surfaces 140, the lateral side walls of the channel 144, an upper part of the intermediary part 150 and/or the chain engagement member 152 of adjacent support members 120 are preferably spaced apart.

Referring to Figures 9a and 9b, whilst any one of the support members 120 is on the lower path portion 134, the lateral side walls of the channel 144, an upper part of the intermediary part 150 and/or the chain engagement member 152 of adjacent support members 120 may be interengaged or at least in part interengaged. Given the pivoting about the interface between the support surfaces 140, the channel supports 148 of adjacent support members 120 are preferably spaced apart.

Referring to Figures 10a and 10b, whilst any one of the support members 120 is on the overboard-end path portion 138 or the vessel-end path portion 136, the support surfaces 140, bases of the channel 144 and channel supports 148 of adjacent support members 120 interengage. It will be appreciated that for a less curvate and/or convex end path portion the bases of the channel 144 and/or channel supports 148 of adjacent support members 120 may in fact not engage. Given the pivoting about the interface 166 between the support surfaces 140, lateral side walls of the channel 144, an upper part of the intermediary part 150 and/or the chain engagement member 152 of adjacent support members 120 are preferably spaced apart.

Given the movement of the support surface 140, the flexible elongate element 12, which is frictionally engaged with the support surface 140, is moved around the moving path 130 from the vessel end 126 of the overboarding device 110 to the overboard end 128 of the overboarding device 110 and then into the water 16. The flexible elongate element 12 is thereby overboarded. Throughout the overboarding process, the flexible elongate element 12 is preferably tensioned to prevent uncontrolled run-off of the flexible elongate element 12 into the water 16.

Having supported the flexible elongate element 12 on the upper path portion 132, the support member 120 moves around the overboard-end path portion 138 of the moving path 130, along the lower path portion 134 and around the vessel-end path portion 136 to again support the flexible elongate element 12.

Whilst described as overboarding the flexible elongate element, it is appreciated that the overboarding device may in fact be used for retrieving the flexible elongate element. The overboarding device may therefore be used as above but in a reverse sequence with the chain element and the movable support element moving anti clockwise.

Although the overboarding device is described as having the contiguous and/or continuous flexible elongate support surface, it will be appreciated that, due to manufacturing tolerances, the movable support elements may in fact be spaced apart. Additionally, it will be apparent that the present specification is intended to include arrangements with the movable support elements being insignificantly spaced apart.

Referring to Figures 11 to 13, there is shown a second embodiment of an overboarding device 110' wherein at least part of each of the support members 120' of the movable support element 118' overlaps in a circumferential direction of the overboarding device 110'. Elements which are similar or identical to those of the preceding overboarding device 110 are denoted by the same or similar reference number with an apostrophe added and further detailed description is omitted.

The overlap may be achieved by each support member 120' having a male mating portion 120a and a female mating portion 120b. The male mating portion 120a is interengageable with the female mating portion 120b. In this way adjacent support members are interengageable. The male and female mating portions 120a, 120b are preferably positioned at or adjacent to opposing edges of the channel 144', although it will be appreciated that they may in fact be positioned at or adjacent to opposing edges of the channel support. Pivoting of each support member 120' relative to the adjacent support members may occur at a point of interengagement between the male and female portions 120a', 120b' and/or the interengagement of the support surfaces 140' of adjacent support members.

Referring to Figure 11, a pair of adjacent support members 120' are shown interengaging in a position on the upper path portion. The male and female mating portions 120a, 120b are interengaged and the support surface bases 142' are similarly interengaged. The channel supports 148' of adjacent support members 120' are preferably spaced apart forming a space therebetween 154', which may be a triangular or trapezoidal prism shaped space or a cuboidal shaped space. The channel walls 144' are similarly spaced apart and having a space 156' which again may be a triangular or trapezoidal prism shaped space or a cuboidal shaped space.

Whilst each support member is described and shown as having only one set of male and female mating portions, it will be appreciated that each support member may have further male and/or female mating portions. Additionally, a lower, inward or interior facing surface of each support member may have male and/or female mating portions to attach to adjacent support members.

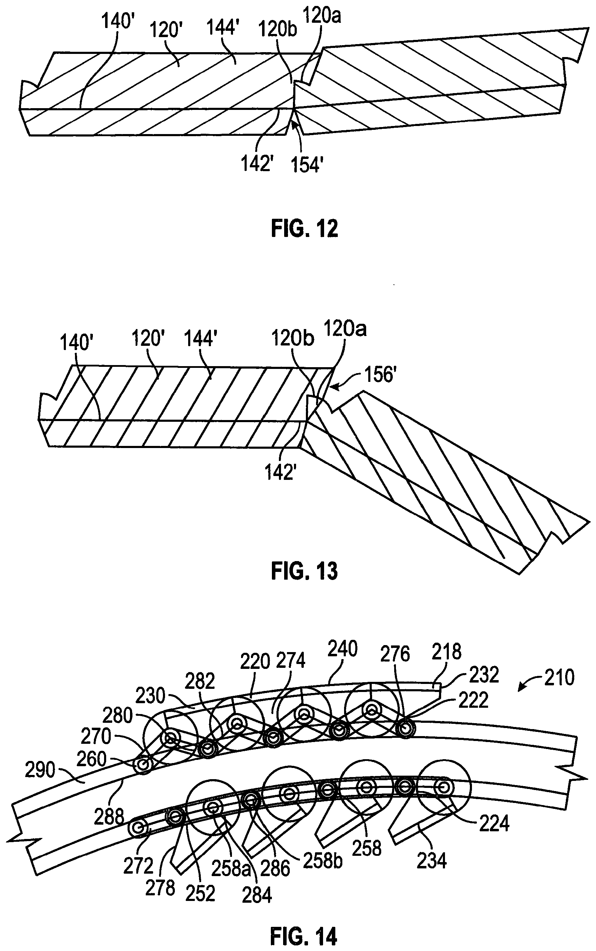

Referring to Figure 12, the pair of adjacent support members are shown interengaging in a position on a lower path portion. The male and female mating portions 120a, 120b are interengaged and the support surface bases 142' and channel walls 144' are similarly interengaged. The channel supports 148' of adjacent support members 120' are preferably spaced apart forming a space therebetween 154', which may be a triangular or trapezoidal prism shaped space or a cuboidal shaped space.

Referring to Figure 13, the pair of adjacent support members 120' are shown interengaging in a position on the overboard or vessel end path portion. The male and female mating portions 120a, 120b are interengaged and the support surface bases 142' are similarly interengaged. The channel walls 144' are spaced apart and have a space 156' therebetween which again may be a trapezoidal or triangular prism shaped space or a cuboidal shaped space. The space 156' between the channel walls of adjacent support members 120' in a position on the vessel and/or overboard end path portion is preferably wider and/or greater than the space between the channel walls of adjacent support members 120' in a position on the upper path portion.

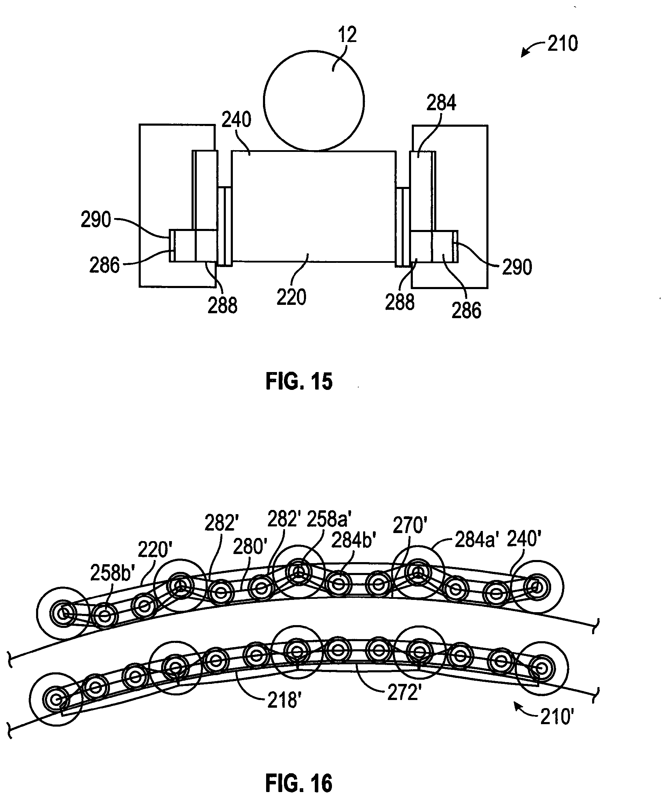

Referring to Figures 14 and 15, there is shown a different overboarding device 210 for continuously supporting a flexible elongate element 12 whilst overboarding the flexible elongate element 12 from a vessel. Elements which are similar or identical to those of the preceding overboarding device are denoted by the same or similar reference number with one hundred added where necessary, and further detailed description is omitted. The overboarding device 210 compromises a movable support element 218, for supporting a flexible elongate element 12, and a chain element 222 for driving the movable support element 218.

The movable support element 218 preferably defines an endless moving path 230 which has an upper path portion 232, lower path portion 234, overboard-end path portion and vessel-end path portion. The moving path 230 is curvate, substantially curvate, arcuate or substantially arcuate and the support members 220 are movable around the endless moving path 230. Whilst the lower path portion 234 may be here arcuate and or curvate, it will be appreciated that the lower path portion 234 may be straight, substantially straight, planar and/or substantially planar. This is as the lower path portion 234 is not required to maintain a minimum bend radius of the flexible elongate element 12.

Similarly, the chain element 222 defines an endless drive path 260, the drive path 260 having an upper path portion 270, lower path portion 272, overboard-end path portion and vessel-end path portion. The drive path 260 is curvate, substantially curvate, arcuate or substantially arcuate and chain members 224 are movable around the endless drive path 260. The drive path 260 is preferably concentric or substantially concentric with the endless moving path 230. Whilst the lower path portion may be here arcuate and or curvate, it will be appreciated that the lower path portion may be straight, substantially straight, planar and/or substantially planar. This is as the lower path portion is not required to maintain a minimum bend radius of the flexible elongate element.

The movable support element 218 has a plurality of support members 220 and each support member 220 has a support surface 240. The support surface 240 may here be curvate, concave, convex or planar. The greatest extent of each movable support element 218 may be the support surface 240. Each support member 220 preferably has a base 274 on which the support surface 240 is seated. The base 274 has the form of a triangular prism with an elongate edge 276 pointing downwards or in a radial inward direction. The base 274 has one rectangular or substantially rectangular chain attachment surface 252 and one rectangular or substantially rectangular chain engagement surface 278. Whilst described as being in the form of a triangular prism, it will be appreciated that the base may in fact be any other shape, for example cuboidal or cylindrical.

The chain element 222 comprises a plurality of chain members 224, each chain member 224 being pivotably attached to adjacent chain members 224 at a chain pivot 258. The chain members 224 preferably comprise a plurality of support chain members 280 and a plurality of spacing chain members 282. The support chain members 280 are interposed from each other by at least one spacing chain member 282 and each support member 220 is attached to a support chain member 280. Here the support chain members 280 and spacing chain members 282 are in an alternating relationship. Each support member 220 is attached to one support chain member 280 via the chain attachment surface 252 of the support member 220 so that the support member 220, or the chain engagement surface 278, extends over, across or to one adjacent chain pivot 258 and one adjacent spacing chain member 282. Each support member 220 here extends from the chain support member 220 in a clockwise direction of the overboarding device 210, from the perspective indicated in Figure 14. Whilst described as being attached in this way, it is appreciated that the support member 220 may not extend over either one chain pivot 258 or one spacing chain member 282, and/or each support member 220 may extend in an anticlockwise direction or the plurality of support members 220 may extend in different directions.

The overboarding device 210 further comprises at least one first wheel 284, roller or rotatable element which is preferably attached to the chain element 122 at, adjacent to, coaxially with or aligned with at least one chain pivot 258. Each first wheel 284 is here coaxially attached adjacent to each chain pivot 258 to, over or across which one support member 220 does not extend. Said chain pivot 258 is hereafter referred to as a first chain pivot 258a. Preferably a centre or axis of the first wheel 284 is aligned with the corresponding first chain pivot 258a.

The overboarding device 210 further comprises at least one second wheel 286 which is preferably attached to the chain element 222 at, adjacent to, coaxially with or aligned with at least one chain pivot 258. Each second wheel 286 is here coaxially attached adjacent to each chain pivot 258 to, over or across which one support member 220 extends. Said chain pivot 258 is hereafter referred to as a second chain pivot 258b. Preferably a centre or axis of each second wheel 286 is aligned with the corresponding second chain pivot 258b. The first wheel 284 preferably has a diameter greater than the second wheel 286. Therefore, there is an alternating arrangement of wheels 284, 286 of a larger size and a smaller size rotatably attached coaxial with each chain pivot 258.

Referring to Figure 15, there are two first wheels 284 at which are positioned at or adjacent to opposite lateral sides each first chain pivot 258a. There are similarly positioned two second wheels 286 with respect to the second chain pivot 258b, with the second wheels 286 positioned laterally outside of, or distal to the chain members 224 as compared to, the first wheels 284. Whilst the second wheels 286 are described as being positioned outside of or distal to the chain members 224 as compared to the first wheels 284, it will be appreciated that the first and second wheels 284, 286 may in fact be laterally aligned.

The overboarding device 210 further comprises at least one first rail 288 or groove for rotatably receiving the first wheels 284. There are here two first rails 288 extending at opposite lateral sides of the chain element 222 to each other along at least part of the drive path 260. The overboarding device 210 further comprises at least one second rail 290 or groove, for receiving the second wheels 286. There are here two second rails 290 extending at opposite lateral sides of the chain element 222 to each other along at least part of the drive path 260. The second rails 290 wheels positioned laterally outside of, or distal to the chain members 224 as compared to, the first rails 288. However, it will be appreciated that the first and second rails 288, 290 may in fact be laterally aligned with each other.

Whilst on the upper drive path 270 portion, the bottom of the first and second rails 288, 290 are vertically, or in the radial direction of the overboarding device 210, aligned with each other. When the first and second wheels 284, 286 are received on their respective rails 288, 290, given the difference of size between the first and second wheels 284, 286, the centre of the first wheels 284 is higher, or more radially distal in the direction of the overboarding device 210, than the centre of the second wheel 286. The centres of the first and second wheels 284, 286 are therefore vertically spaced apart. Given that the centre of the first wheel 284, 286 is coaxially attached to the first chain pivot 258a and the centre of the second wheel 286 is coaxially attached to the second chain pivot 258b, the chain element 222 is in a zigzag or serpentine arrangement, on the upper path portion 232. This may be with the exception of the chain members 224 at either end of the upper path portion 232. Each of the spacing chain members 282 and the support chain members 280 interpose a pair of first and second wheels 284, 286. An angle between each spacing chain member 282 and each support chain member 280 on the upper path portion 232 matches or corresponds to an angle between the chain attachment surface 252 and the chain engagement surface 278 of each support member 220. This angle may here be between 110° and 150° and more preferably 130°.

Given the zigzag arrangement of the chain element 222 and the above matching angles, the chain engagement surface 278 of the support member 220 engages the spacing chain member 282. In this way each support member 220 engages and is supported by two chain members 224 of the chain element 222. The support surface 240 of each support member 220 on the upper path portion 232 of the moving path 230 alignably or substantially alignably engages the support surface 240 of adjacent support members 220. In this way the support members 220 of the upper path portion 232 provide a contiguous or continuous flexible-elongate-element support surface for the flexible elongate element 12. The support members 220 are in a support condition.

At or adjacent to the overboard-end path portion, the relative positioning of the first and second rails 288, 290 preferably transitions so that the centre of the first wheel 284 and the centre of the second wheel 286, when attached to their respective rail or rails, are vertically, or in the radial direction of the overboarding device 210, aligned with each other. This may be achieved by the path of the first rail 288 extending inwardly towards the centre of the drive path 260, the path of the second rail 290 extending outwardly away from the centre of the drive path 260, or a combination of these two effects. The inward and/or outward motion of the first and second rails 288, 290 relative to each other may here be equivalent to or substantially equivalent to half of the diameter of the first wheel 284.

Whilst this transition is described as occurring at or adjacent to the overboard end, it will be appreciated that the transition may occur at or across any of the upper path portion 270, vessel-end path portion and/or lower path portion 272.

Therefore, on the lower path portion 272, each chain member 224 is aligned or substantially aligned with the adjacent chain members 224. This may be with the exception of the chain members 224 at the ends of the lower path portion 272. The chain element 222 is therefore curvate, substantially curvate, linear or substantially linear in the lower path portion 234. The angle between the support chain member 280 and the spacing chain member 282 may be preferably between 160° and 200° and more preferably 180°. This angle therefore does not correspond or match the angle between the chain attachment surface 252 and the chain engagement surface 278 of each support member 220. Therefore, the chain engagement surface 278 of each support member 220 on the lower path portion 272 does not engage the spacing chain member 282 and is in fact spaced apart from it. The support members 220 are in a return condition.

Whilst the angle between each support and spacing chain member is described and shown as being between 110 ° and 150° when on the upper path portion and between 160° and 200 ° when on the lower path portion, it will be appreciated that other ranges of angles may be considered. For example, when on the lower path portion, the angle between adjacent spacing and support members may be between 170 ° and 190 °, and when on the upper path portion the angle between adjacent spacing and support members may be between 150 ° and 170 °. Preferably, the angle between adjacent spacing and support members when on the upper path portion may be between 2 ° and 15 °, and more preferably between 5 ° and 10 °, less than the angle between adjacent spacing and support members when on the lower path portion.

The support surface 240 of each support member 220 on the lower path portion 272 is not engaged with the support surface 240 of adjacent support members 220 and is spaced apart from it. Said support surfaces 240 are misaligned or angularly off-set from the direction of motion of the movable support element 218. Due to this arrangement, it is possible to increase the frequency of movable support members 220 within a given distance of moving path 230 or drive path 260, as compared to the upper path portion 270 arrangement.

At or adjacent to the vessel-end path portion, the relative positioning of the first and second rails 288, 290 preferably transitions so that the bottom of the first and second rails 288, 290 are vertically aligned with each other. This transition may be the reverse of the transition at or adjacent to the overboard-end path portion. In this way the arrangement of the support members 220 on the lower path portion 234 is able to transition to that of the upper path portion 232 as they move around the vessel-end path portion.

The chain element 222 preferably comprises at least one drive sprocket at each of the vessel-end and overboard-end path portions. Each drive sprocket is engageable and/or interdigitatable with at least one chain member 224 so that the chain members 224 are drivable by the drive sprockets. The drive sprockets may in turn be drivable by a motor, although it will be appreciated that the chain elements 222 may be driven by the overboarding action of the in use flexible elongate element 12.

In use, a flexible elongate element 12 is positioned on the movable support element 218 so that it engages at least part of the support surface 240 of at least one support member 220 on the upper path portion 232. The drive sprockets may be rotated so as to drive the chain element 222 which in turn moves the first and second wheels 284, 286 and the movable support element 218. The movable support element 218 is moved around the moving path 230 in an anti-clockwise direction. By virtue of its frictional engagement with the movable support element 218, the flexible elongate element 12 is moved around the upper path portion 232 of the moving path 230 from the vessel end 226 to the overboard end 228. Whilst on the upper path portion 232 the flexible elongate element 12 is contiguously or contiguously supported due to the contiguous or continuous flexible-elongate-element support surface 240 provided by the interengaging movable support element 218. The flexible elongate element 12 is then overboarded from the overboarding device 210.

The support members 220 which had supported the flexible elongate element 12 move from the upper path portion 232 to the overboard end path portion and to the lower path portion 234, transitioning from the support condition to the return condition. The support members 220 return along the lower path portion 234, around the vessel-end path portion and to the upper path portion 232, transitioning to the support condition, to receive the flexible elongate element 12. Although each support member and its associated support chain member are described as being distinct, it will be appreciated that they may in fact each be unitarily formed as a one piece.

Whilst each support member is described and shown as being mounted to a support chain member so that it is fixed relative to the support chain member, it will be appreciated that the support members may be pivotably or rotatably attached to the chain element. In this way each support member may pivot between a support condition when on the upper support path portion and a return condition on the lower return path portion. This pivoting may be provided by a roller on each support member which may interact with a control surface.

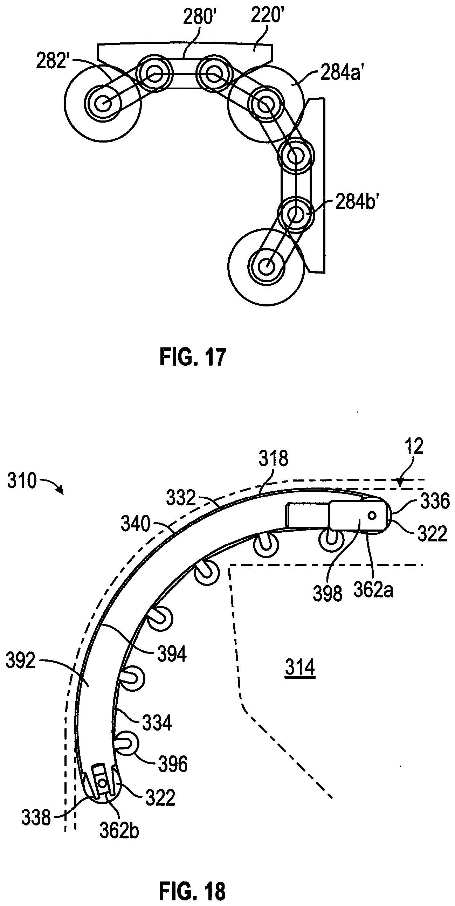

Referring to Figures 16 and 17 there is shown a second embodiment 210' of the different overboarding device wherein the chain element 122 has a support chain member 280' with one spacing chain member 282' pivotably connected at each end at a second chain pivot 258b'. The support surface 240' of each support member 220' is aligned or substantially aligned with the spacing chain member 282'. Elements which are similar or identical to those of the preceding overboarding device 210 are denoted by the same or similar reference number with an apostrophe added and further detailed description is omitted.

Adjacent spacing chain members 282' are pivotably attached at a first pivot 258a'. A first wheel 284a' is rotatably attached to, at, adjacent to and/or aligned with each first pivot 258a'. A second wheel 284b' is rotatably attached to, at, adjacent to and/or aligned with each second pivot 258b'. One first wheel 284a' is attached to either lateral side of each first pivot 258a' and one second wheel 284b' is attached to either lateral side of each second pivot 258b'. The first wheel 284a' has a greater diameter than the second wheel 284b', similar or identical to the preceding embodiment.

A first rail for receiving each first wheel 284a' and a second rail for receiving each second wheel 284b' are arranged in a similar or identical way as the previous embodiment.

When on an upper drive path portion 270', centre of the first wheels 284a' are unaligned with those of the second wheels 284b'. The spacing members 282' are unaligned and/or angularly offset with respect to the upper drive path portion 260' and/or the support chain members 280'. The support surfaces 240' of the movable supports 220', on the upper path portion 232', are therefore aligned with a direction of motion of the movable support element 218' and said support surfaces 240' are substantially aligned to be contiguous with the support surfaces 240' of adjacent movable support members 220'.

When on the lower path portion 272' the centres of the first and second wheels 284a', 284b' are aligned or substantially aligned with each other and/or the direction of motion of the movable support element 218'. Therefore, the spacing and support chain members 282', 280' are aligned or substantially aligned with each other and/or the direction of motion of the movable support element 218'. Therefore, each movable support member 220' is caused to pivot towards the adjacent support member 220'. For example, if considering three adjacent movable support members 220' in isolation arranged consecutively, the two end movable support members 220' would pivot towards the middle movable support member 220'. The support surface 240' of each movable support member 220' is thereby misaligned with the direction of motion of the movable support element 218' and/or each other. The movable support members 220' are thereby able to traverse the concave lower path portion 272' without impinging and/or clashing.

Referring in particular to Figure 17, there is shown the vessel-end path portion or overboard-end path portion where the movable support members 220' transitions between the support and return conditions, the support members 220' being spaced apart from each other.

Whilst each support member is described and shown as being adjacent to one support member and one spacing member and each spacing member is shown to be adjacent to one support member at each end, it will be appreciated that other configurations are possible. For example, there may be multiple spacing members interspacing support members, and/or at least one support member may be adjacent to one support member at each end.

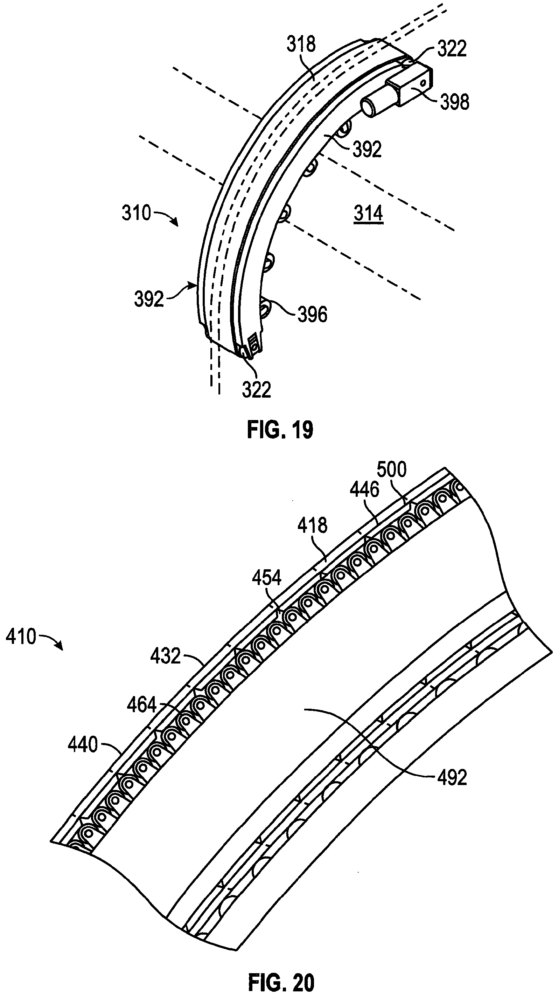

Referring to Figures 18 and 19, there is shown a different overboarding device 310 for continuously supporting a flexible elongate element 12 whilst overboarding the flexible elongate element 12 from a vessel 314. Elements which are similar or identical to those of the initial overboarding device are denoted by the same or similar reference number with two hundred added where necessary, and further detailed description is omitted.

The overboarding device 310 comprises: an endless and contiguous movable support element 318 for supporting a flexible elongate element 12; a drive element 322 for driving the movable support element 318; and an arcuate support element 392 to support the movable support element 318.

The arcuate support element 392 here has the form of an arc of a circle, transitioning from a horizontal or substantially horizontal alignment to a vertical or substantially vertical alignment. Whilst described as being arcuate, it will be appreciated that the arcuate support element 392 may be at least in part planar and/or faceted. The arcuate support element 392 is preferably fixed in place.

The arcuate support element 392 has a convex upper support surface 332 and a concave lower return surface 334. Whilst described as having a concave return surface, it will be appreciated that the lower return surface may in fact be planar, straight or have a non-concave curvate form. Additionally, the convex upper support surface 332 is here curvate, having a constant curvature, although it will be appreciated that the upper support surface may at least in part be facetted, planar or have a varying curvature. At least the upper support surface 332 of the arcuate support element 392 is a continuous or contiguous surface.

The arcuate support element 392 preferably also has an overboard-end surface 338 and a vessel-end surface 336 which join the upper and lower return surfaces 332, 334. Although described as having vessel-end and overboard-end surfaces 336, 338, it will be appreciated that the upper and lower return surfaces may in fact nor be contiguous with each other and/or joined together and therefore there may not be vessel-end and overboard-end surfaces.

The endless and contiguous movable support element 318 preferably extends around the arcuate upper support surface 332 and the lower return surface 334. In this way the movable support element 318 is supported by the arcuate support element 392. The movable support element 318 may be in direct contact with the upper support surface 332 of the arcuate support element 392. In this way the movable support element 318 provides a contiguous or continuous flexible-elongate-element support surface 340 on the upper support surface 332 of the arcuate support element 392.

The movable support element 318 is preferably flexible, pliable and/or formed from a flexible or pliable material. The movable support element 318 may at least in part be formed from rubber, for example natural rubber, neoprene, polyurethane or silicone. Additionally or alternatively, the movable support element 318 may be formed of a composite material, for example with rubber as the matrix material and having steel, polymer or ceramic fibres, wires, meshes or lattices arranged or interspersed within the rubber.

An arcuate-support-element engagement surface 394 of the movable support element 318 is preferably formed from a low-friction material. Such low-friction materials may include, nylon, polytetrafluoroethylene or phenolic plastics. Additionally or alternatively the upper support surface 332 may be formed from a low-friction material, such as any of those given previously.

The movable support element 318 extends around the overboard-end surface of the movable support surface 340 and extends along the lower return surface 334 of the arcuate support element 392. The overboarding device 310 preferably further comprises a plurality of return rotatable elements 396 or rollers. The return rotatable elements 396 are spaced apart from one another along the return surface 334 in a circumferential direction of the overboarding device 310. Although described as being spaced apart, it will be appreciated that the rollers may in fact interengage. The return rotatable elements 396 are positioned so that an engagement surface of the return rotatable elements 396 is spaced apart from the lower return surface 334. The minimum spacing of the engagement surface and the lower return surface 334 preferably corresponds to, substantially corresponds to, matches or substantially matches a thickness, or extent in a radial direction of the overboarding device 310, of the movable support element 318. In this way the movable support element 318 is interengaged between each return rotatable element 396 and the lower return surface 334. The axis of rotation of each of the return rotatable elements 396 is preferably aligned with or substantially aligned with an axial direction of the overboarding element. Whilst return rotatable elements are described and shown, it will be appreciated that there may in fact not be return rotatable elements.

The movable support element 318 and/or the arcuate support element 392 optionally may have longitudinally and/or laterally extending drainage channels. Said channels may be at or adjacent to the support surface 332 of the arcuate support element 392, the arcuate-support-element engagement surface 394 of the movable support element 318 and/or the flexible-elongate-element support surface 340 of the movable support element 318. Any of the above surfaces may additionally have support elements formed thereon or therein, for example to increase frictional engagement between the flexible elongate element 12 and the movable support element 318.

The drive element 332 here includes a vessel-end wheel 362a, at or adjacent to the vessel end 326 of the overboarding device 310, and an overboard-end wheel 362b at the overboard end 328 of the overboarding device 310. Each wheel 362a, 362b preferably frictionally engages the movable support element 318 so that when either of the wheels 362a, 362b is rotated, the movable support element 318 is moved around the arcuate support element 392. The vessel-end wheel 362a is preferably rotated by a motor 398 and/or associated gearbox. Whilst described as having wheels to move the movable support element, it will be appreciated that there may in fact only be one wheel or the movable support element may be driven via other drive means, for example a chain.

In use a flexible elongate element 12 is positioned on the flexible-elongate-element support surface 340 at or adjacent to the vessel end 326 of the movable support element 318. The motor 398 rotates the vessel-end wheel 362a so that the movable support element 318 moves in an anti-clockwise direction. The speed at which the motor 398 rotates the vessel-end wheel 362a may match or correspond to the speed at which the flexible elongate element 12 is being moved towards the stem of the vessel 314. The movement of the movable support element 318 preferably causes the movement of the flexible elongate element 12 along the contiguous flexible-elongate-element support surface 340 towards the overboard end 328 due to frictional engagement between the flexible elongate element 12 and the movable support element 318. The movement of the flexible elongate element 12 may be caused entirely by the movable support element 318 or in combination with the overboarding action and/or weight of the flexible elongate element 12.

The flexible elongate element 12 may then be overboarded from the overboard end 328 into the water 16. The movable support element 318 continues to circulate around the arcuate support element 392 along the lower return surface 334 being supported between the return rotatable elements 396 and the lower return surface 334. The movable support element 318 is thereby returned to the upper support surface 332.

A lubricant may in use be utilised between the movable support element 318 and the arcuate support element 392 to enable or promote relative motion therebetween. For example, water from the water 16 into which the flexible elongate element 12 is being overboarded, may be directed between the two elements. In this way the movable support element 318 and the arcuate support element 392 may be at least in part spaced apart and/or interposable by a lubricant.

Whilst the arcuate support element is described as being contiguous, it will be appreciated that the arcuate support element may in fact at least in part be a plurality of arcuately arranged rotatable elements such as rollers. Said rotatable elements may be positioned so as to interengage or may be spaced apart from each other. The movable support element may be supported upon an uppermost, or outermost in the radial direction of the overboarding device, surface, line or point of each element. The said surface, line or points of each rotatable element is spaced apart from the corresponding surface line or point of adjacent rotatable elements. Therefore, the movable support element may bridge or extend between the surface, line of points of adjacent rotatable elements. This arrangement may therefore provide a contiguous flexible-elongate-element support surface.

Referring to Figure 20 there is shown a different overboarding device 410 for continuously supporting a flexible elongate element whilst overboarding the flexible elongate element 12 from a vessel. Here the overboarding device 410 further comprises a movable-support-clement base 500. Elements which are similar or identical to those of the initial overboarding device are denoted by the same or similar reference number with three hundred added, and further detailed description is omitted

The movable-support-clement base 500 preferably comprises a plurality of base members 446, each having a trapezoidal or substantially trapezoidal lateral cross-section. Although described as having trapezoidal or substantially trapezoidal lateral cross sections, each of the base members 446 preferably has a curvate upper and lower surface. Each base member is attached to a movable support element 418 so that an elongate extent of the base member 446 is aligned with a lateral extent of the movable support element 418 each base member 446 engaging or substantially engaging adjacent base member 446. The base members 446 are each attached to the movable support element 418 so that the base of the trapezoid engages or is proximal to the movable support element 418. In this way there may be considered to be a substantially triangular prism shaped space 454 interspacing each base member 446 from adjacent base members 446.

The second embodiment additionally includes a plurality or arcuately arranged rotatable elements 464 or rollers, similar or identical to as previously described above. Said rotatable elements 464 may be arranged around an upper support surface 432 of an arcuate support element 492 and may be positioned so as to engage the movable-support-element base 500.

The above second embodiment may be used as described previously. Whilst on the convex or substantially convex upper support surface 432, the base members 446 may pivot or rotate into the triangular prism shaped space 454 between adjacent base members 446 so as to allow a contiguous flexible-elongate-element support surface 440 to be maintained.

Whilst the device is described as an overboarding device and being used for overboarding flexible elongate elements, the device may similarly be used for onboarding or recovering flexible elongate elements.

It is therefore possible to provide a contiguous, substantially contiguous, continuous or substantially continuous flexible-elongate-element support surface over an arcuate or curvate endless path. A contiguous or continuous surface prevents of limits the flexible elongate element from being damaged when being transitioned from a horizontal to a vertical orientation, especially whilst under tension.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention as defined herein.

## Claims

1. An overboarding device (110) for overboarding a flexible elongate element (12) from a vessel (114), the device (110;) comprising:
a movable support element (118) for supporting a flexible elongate element (12), the movable support element (118) having a plurality of support members (120) and each support member (120) having a support surface (140), which has a support-surface base (142), which is a lowest most line, point or plane, bottom or nadir of the support surface (140); and
at least one chain element (122) for moving the movable support element (118), the chain element (122) having a plurality of chain members (124), each chain member (124) being attached to at least one support member (120) and pivotably attached to at least one adjacent chain member (124) at a chain pivot (158);
**characterised in that** the overboarding device (110) is configured for contiguously supporting the flexible elongate element (12), as support surfaces (140) of adjacent support members (120) pivot along an interface (166) and support surface bases (142) of adjacent support surfaces (140) interengage along said interface (166), said interface (166) being positioned coaxially or substantially coaxially with the chain pivot (158) of the corresponding chain members (124), such that adjacent support surfaces (140) remain at least in part contiguous as the movable support element (118) is driven.

2. An overboarding device (110) as claimed in claim 1, wherein the movable support element (118) defines an endless moving path (130) having curvate upper and lower path portions (132, 134), the lower path portion (134) being more curved than the upper path portion (132).

3. An overboarding device (110) as claimed in claim 2, wherein the movement of the pivotable interface (166) of each support member (120) defines the endless moving path (130).

4. An overboarding device (110) as claimed in any one of the preceding claims, wherein the width of each support member (120) decreases in two directions from an extent of the support member (120) between the two pivotable interfaces (166) associated with each support member (120).

5. An overboarding device (110) as claimed in any one of the preceding claims, wherein the profile of the support member (120) is at least in part trapezoidal.

6. An overboarding device (110) as claimed in any one of claims 2 to 5, wherein the or each chain element (122) defines an endless curved drive path (160), the drive path (160) being aligned with the endless moving path (130).

7. An overboarding device (110) as claimed in any one of the preceding claims, wherein the or each chain element (122) is positioned at or adjacent to a lateral edge of the movable support element (118).

8. An overboarding device (110) as claimed in claim 7, wherein there are two chain elements (122), each chain element (122) being positioned at a different lateral edge of the movable support element (118) to each other.

9. An overboarding device (110) as claimed in any one of the preceding claims, wherein the movable support element (118) has a flexible-elongate-element receiving channel (144) to provide lateral support to the flexible elongate element (12) when positioned on the support surface (140).

10. An overboarding device (110) as claimed in any one of the preceding claims, wherein each support member (120) includes a channel support (148) and a chain engagement member (152), the channel support (148) and the chain engagement member (152) being radially and/or vertically spaced apart.

11. An overboarding device (110) as claimed in claim 10, wherein the chain member (124) is positioned vertically beneath and/or inward in an axial direction of the overboarding device (110) of the chain engagement member (152).

12. An overboarding device (110) as claimed in any one of the preceding claims, wherein each support member (120) is spaced from each adjacent support member (120) by a triangular prism shaped space (154) so that each support member (120) is able to act as a stop to prevent or limit over-rotation of adjacent support members (120) when each support member (120) rotates towards an adjacent support member (120).

13. An overboarding device (110) as claimed in any one of the preceding claims, wherein the movable support element (118) is arcuate or substantially arcuate.

14. An overboarding device (110) as claimed in any one of the preceding claims, wherein the chain members (124) are movable on a plurality of rotatable elements (164).

## Patentansprüche

1. Überladevorrichtung (110) zum Überladen eines flexiblen länglichen Elements (12) von einem Schiff (114), wobei die Vorrichtung (110) umfasst:
ein bewegliches Stützelement (118) zum Stützen eines flexiblen länglichen Elements (12), wobei das bewegliche Stützelement (118) eine Vielzahl von Stützgliedern (120) aufweist und jedes Stützglied (120) eine Stützfläche (140) aufweist, die eine Stützflächenbasis (142) aufweist, die eine unterste Linie, einen Punkt oder eine Ebene, einen Boden oder einen Nadir der Stützfläche (140) darstellt; und
zumindest ein Kettenelement (122) zum Bewegen des beweglichen Stützelements (118), wobei das Kettenelement (122) eine Vielzahl von Kettengliedern (124) aufweist, von denen jedes Kettenglied (124) an zumindest einem Stützglied (120) befestigt und an einem Kettengelenk (158) schwenkbar an zumindest einem benachbarten Kettenglied (124) befestigt ist;
**dadurch gekennzeichnet, dass** die Überladevorrichtung (110) so konfiguriert ist, dass sie das flexible längliche Element (12) zusammenhängend stützt, während sich Stützflächen (140) benachbarter Stützglieder (120) entlang einer Schnittstelle (166) schwenken und Stützflächenbasen (142) benachbarter Stützflächen (140) entlang der Schnittstelle (166) ineinandergreifen, wobei die Schnittstelle (166) koaxial oder im Wesentlichen koaxial zum Kettengelenk (158) der entsprechenden Kettenglieder (124) positioniert ist, sodass benachbarte Stützflächen (140) zumindest teilweise zusammenhängend bleiben, während das bewegliche Stützelement (118) angetrieben wird.

2. Überladevorrichtung (110) nach Anspruch 1, wobei das bewegliche Stützelement (118) einen endlosen Bewegungspfad (130), der gekrümmte obere und untere Pfadabschnitte (132, 134) aufweist, definiert, wobei der untere Pfadabschnitt (134) stärker gekrümmt ist als der obere Pfadabschnitt (132).

3. Überladevorrichtung (110) nach Anspruch 2, wobei die Bewegung der schwenkbaren Schnittstelle (166) jedes Stützgliedes (120) den endlosen Bewegungspfad (130) definiert.

4. Überladevorrichtung (110) nach einem der vorstehenden Ansprüche, wobei die Breite jedes Stützgliedes (120) in zwei Richtungen von einem Ausmaß des Stützgliedess (120) zwischen den zwei schwenkbaren Schnittstellen (166), die mit jedem Stützglied (120) verbunden sind, abnimmt.

5. Überladevorrichtung (110) nach einem der vorstehenden Ansprüche, wobei das Profil des Stützgliedes (120) zumindest teilweise trapezförmig ist.

6. Überladevorrichtung (110) nach einem der Ansprüche 2 bis 5, wobei das oder jedes Kettenelement (122) einen endlosen gekrümmten Antriebspfad (160) definiert, wobei der Antriebspfad (160) mit dem endlosen Bewegungspfad (130) ausgerichtet ist.

7. Überladevorrichtung (110) nach einem der vorstehenden Ansprüche, wobei das oder jedes Kettenelement (122) an oder neben einer seitlichen Kante des beweglichen Stützelements (118) positioniert ist.

8. Überladevorrichtung (110) nach Anspruch 7, wobei zwei Kettenelemente (122) vorhanden sind, wobei jedes Kettenelement (122) an einer anderen seitlichen Kante des beweglichen Stützelements (118) zueinander positioniert ist.

9. Überladevorrichtung (110) nach einem der vorstehenden Ansprüche, wobei das bewegliche Stützelement (118) einen flexiblen, länglichen Elementaufnahmekanal (144) aufweist, der dem flexiblen, länglichen Element (12) seitliche Unterstützung bietet, wenn es auf der Stützfläche (140) positioniert ist.

10. Überladevorrichtung (110) nach einem der vorstehenden Ansprüche, wobei jedes Stützglied (120) eine Kanalstütze (148) und ein Ketteneingriffsglied (152) beinhaltet, wobei die Kanalstütze (148) und das Ketteneingriffsglied (152) radial und/oder vertikal voneinander beabstandet sind.

11. Überladevorrichtung (110) nach Anspruch 10, wobei das Kettenglied (124) vertikal unterhalb und/oder nach innen in Axialrichtung der Überladevorrichtung (110) des Ketteneingriffsgliedes (152) positioniert ist.

12. Überladevorrichtung (110) nach einem der vorstehenden Ansprüche, wobei jedes Stützglied (120) von jedem benachbarten Stützglied (120) durch einen dreieckigen prismenförmigen Zwischenraum (154) beabstandet ist, sodass jedes Stützglied (120) als Anschlag fungieren kann, um eine Überdrehung benachbarter Stützglieder (120) zu verhindern oder zu begrenzen, wenn sich jedes Stützglied (120) auf ein benachbartes Stützglied (120) zudreht.

13. Überladevorrichtung (110) nach einem der vorstehenden Ansprüche, wobei das bewegliche Stützelement (118) bogenförmig oder im Wesentlichen bogenförmig ist.

14. Überladevorrichtung (110) nach einem der vorstehenden Ansprüche, wobei die Kettenglieder (124) auf einer Vielzahl von drehbaren Elementen (164) beweglich sind.

## Revendications

1. Dispositif de passage par-dessus bord (110) destiné à rejeter par-dessus bord un élément allongé flexible (12) depuis un navire (114), le dispositif (110;) comprenant :
un élément de support mobile (118) destiné à supporter un élément allongé flexible (12), l'élément de support mobile (118) présentant une pluralité d'éléments de support (120) et chaque élément de support (120) présentant une surface de support (140) qui présente une base de surface de support (142) qui est la ligne, le point ou le plan le plus bas, le fond ou le nadir de la surface de support (140) ; et
au moins un élément de chaîne (122) pour déplacer l'élément de support mobile (118), l'élément de chaîne (122) présentant une pluralité d'éléments de chaîne (124), chaque élément de chaîne (124) étant attaché à au moins un élément de support (120) et attaché de manière pivotante à au moins un élément de chaîne (124) adjacent au niveau d'un pivot de chaîne (158) ;
**caractérisé en ce que** le dispositif de passage par-dessus bord (110) est configuré pour supporter de manière contiguë l'élément allongé flexible (12), lorsque les surfaces de support (140) des éléments de support (120) adjacents pivotent le long d'une interface (166) et des bases de surfaces de support (142) de surfaces de support (140) adjacentes s'engagent les unes dans les autres le long de ladite interface (166), ladite interface (166) étant positionnée coaxialement ou sensiblement coaxialement avec le pivot de chaîne (158) des éléments de chaîne (124) correspondants de sorte que les surfaces de support (140) adjacentes restent au moins partiellement contiguës lorsque l'élément de support mobile (118) est entraîné.

2. Dispositif de passage par-dessus bord (110) selon la revendication 1, dans lequel l'élément de support mobile (118) définit un chemin de déplacement sans fin (130) présentant des parties de chemin supérieures et inférieures incurvées (132, 134), la partie de chemin inférieure (134) étant plus incurvée que la partie de chemin supérieure (132).

3. Dispositif de passage par-dessus bord (110) selon la revendication 2, dans lequel le mouvement de l'interface pivotante (166) de chaque élément de support (120) définit le chemin de déplacement sans fin (130).

4. Dispositif de passage par-dessus bord (110) selon l'une quelconque des revendications précédentes, dans lequel la largeur de chaque élément de support (120) diminue dans deux directions à partir d'une étendue de l'élément de support (120) entre les deux interfaces pivotantes (166) associées à chaque élément de support (120).

5. Dispositif de passage par-dessus bord (110) selon l'une quelconque des revendications précédentes, dans lequel le profil de l'élément de support (120) est au moins en partie trapézoïdal.

6. Dispositif de passage par-dessus bord (110) selon l'une quelconque des revendications 2 à 5, dans lequel le ou chaque élément de chaîne (122) définit un chemin d'entraînement incurvé sans fin (160), le chemin d'entraînement (160) étant aligné sur le chemin de déplacement sans fin (130).

7. Dispositif de passage par-dessus bord (110) selon l'une quelconque des revendications précédentes, dans lequel le ou chaque élément de chaîne (122) est positionné au niveau ou à proximité d'un bord latéral de l'élément de support mobile (118).

8. Dispositif de passage par-dessus bord (110) selon la revendication 7, dans lequel il existe deux éléments de chaîne (122), chaque élément de chaîne (122) étant positionné au niveau d'un bord latéral différent de l'élément de support mobile (118) l'un par rapport à l'autre.

9. Dispositif de passage par-dessus bord (110) selon l'une quelconque des revendications précédentes, dans lequel l'élément de support mobile (118) présente un canal de réception d'élément allongé flexible (144) pour fournir un support latéral à l'élément allongé flexible (12) lorsqu'il est positionné sur la surface de support (140).

10. Dispositif de passage par-dessus bord (110) selon l'une quelconque des revendications précédentes, dans lequel chaque élément de support (120) comprend un support de canal (148) et un élément d'engagement de chaîne (152), le support de canal (148) et l'élément d'engagement de chaîne (152) étant radialement et/ou verticalement espacés.

11. Dispositif de passage par-dessus bord (110) selon la revendication 10, dans lequel l'élément de chaîne (124) est positionné verticalement sous et/ou vers l'intérieur dans une direction axiale du dispositif de passage par-dessus bord (110) de l'élément d'engagement de la chaîne (152).

12. Dispositif de passage par-dessus bord (110) selon l'une quelconque des revendications précédentes, dans lequel chaque élément de support (120) est espacé de chaque élément de support (120) adjacent par un espace en forme de prisme triangulaire (154) de sorte que chaque élément de support (120) puisse servir de butée pour empêcher ou limiter la surrotation des éléments de support (120) adjacents lorsque chaque élément de support (120) tourne vers un élément de support (120) adjacent.

13. Dispositif de passage par-dessus bord (110) selon l'une quelconque des revendications précédentes, dans lequel l'élément de support mobile (118) est arqué ou sensiblement arqué.

14. Dispositif de passage par-dessus bord (110) selon l'une quelconque des revendications précédentes, dans lequel les éléments de chaîne (124) sont mobiles sur une pluralité d'éléments rotatifs (164).
